# FASCICULE DE BREVET EUROPEEN

(11) **EP 0 691 911 B1**
(45) Date de publication et mention de la délivrance du brevet: **14.04.1999**
(21) Numéro de dépôt: 94928432.7
(22) Date de dépôt: 26.09.1994
(51) Int. Cl.: B60P 1/64

(54) **CHASSIS AMOVIBLE POUR CHARGEMENT, DECHARGEMENT ET TRANSBORDEMENT DE CONTENEURS**
ABNEHMBARER TRAGRAHMEN ZUM BELADEN, ENTLADEN UND VERLADEN VON CONTAINERN
REMOVABLE CHASSIS FOR LOADING, UNLOADING AND TRANSFERRING CONTAINERS

(30) Priorité: 27.09.1993 FR 9311753
(43) Date de publication de la demande: 17.01.1996
(73) Titulaire: Lechevallier, Gérald, 84170 Monteux (FR); AIELLO, Francois, 13100 Aix-en-Provence (FR); Figueiredo, Francisco, 13270 Fos-sur-Mer (FR)
(72) Inventeur: Lechevallier, Gérald, 84170 Monteux (FR); AIELLO, Francois, 13100 Aix-en-Provence (FR); Figueiredo, Francisco, 13270 Fos-sur-Mer (FR)
(86) Numéro de dépôt international: FR9401114
(87) Numéro de publication internationale: WO9509096

(56) Documents cités:
- EP-A- 0 422 894
- DE-A- 2 440 182
- DE-A- 2 756 690
- GB-A- 859 759

## Description

La présente invention a pour objet un châssis amovible pour chargement, déchargement et transbordement de conteneurs ou de charges diverses, selon les caractéristiques du préambule de la revendication 1.

Il concerne le secteur du transport de marchandises en général et est destiné aux entreprises ayant à charger ou à décharger des conteneurs et charges diverses sur des véhicules routiers ou des wagons.

Le transport des marchandises est de plus en plus assuré par des conteneurs standardisés et normalisés. En général le conteneur reçoit les marchandises à transporter alors qu'il est entreposé sur le sol, et est ensuite chargé sur un camion ou une remorque routière d'où il sera transbordé sur un wagon ou un navire, puis à nouveau transbordé sur un moyen de transport routier qui l'amènera à son lieu de destination pour permettre le retrait de la marchandise. A ce jour la manipulation des conteneurs s'effectue le plus souvent à l'aide de moyen de manutention lourds tels que grues, ponts roulants, chariots élévateurs de très forte puissance, etc. Ces moyens existent dans les ports ou les gros ateliers industriels par exemple, mais, lorsqu'ils ne se trouvent pas sur les lieux, il faut les amener à pied d'euvre, ce qui entraîne des frais très importants. Pour diminuer ces frais partiellement, on laisse le conteneur sur le camion ou remorque, ce qui entraîne une immobilisation coûteuse.

Le brevet N° DE 2 440 182 (Klaus KASPAR), représentant l'état de la technique le plus prôche, décrit un camion équipé d'un châssis comportant à l'avant et à l'arrière des poutres télescopiques montées chacune sur un double jeu de vérins verticaux permettant de les amener au-dessus du conteneur à charger ou à décharger. Un cadre mobile s'accrochant sur le toit du conteneur peut être élevé ou abaissé au moyen de câbles dont les extrémités sont fixées aux poutres télescopiques, et qui passent par une série de poulies montées sur ledit cadre mobile dont certaines peuvent être déplacées longitudinalement par des vérins. L'ensemble est complété par un jeu de stabilisateurs articulés destinés à maintenir l'assise du camion durant la manutention.

Dans ce dispositif, le camion ne peut être employé pour d'autres usages et il n'est pas prévu de moyen de contrôle des mouvements du conteneur. Le poids des conteneurs pouvant être manutentionnés est limité en raison du fait que, lorsque les poutres télescopiques sont déployées, la charge est entièrement en porte-à-faux.

Ces problèmes sont résolus par les dispositifs présentés dans l'invention décrite :
Il s'agit d'un appareil qui peut être un kit séparé ; ou un kit avec châssis incorporé. Par sa conception cet appareil peut s'adapter sur l'ensemble des remorques, camions ou Wagons, et en étant conforme aux transports. Car il est conçu pour s'inscrire dans des gabarits routiers et ferroviaires. Il permet les manutentions de conteneurs normalisés par l'utilisations de ces coins d'ancrage ISO. Les remorques restent polyvalentes, car le démontage rapide du kit ou châssis permet de libérer les plateaux de transport sans autre intervention.

Cet appareil est constitué d'un châssis indépendant ayant sensiblement la largeur du conteneur et pouvant être installé et verrouillé sur le plateau d'un camion ou d'une remorque, ledit châssis comportant un portique avant et un portique arrière équipés chacun d'une colonne mobile avec pied rétractable pouvant prendre appui sur le sol, ladite colonne étant montée sur deux poutres télescopiques haute et basse du portique pouvant se déployer latéralement, un chariot roulant sur la poutre télescopique haute permettant par vérins et pourvu d'élingues terminées par des crochets s'adaptant aux blocs d'accrochage inférieurs prévus sur les conteneurs normalisés forment l'ensemble de l'appareil.

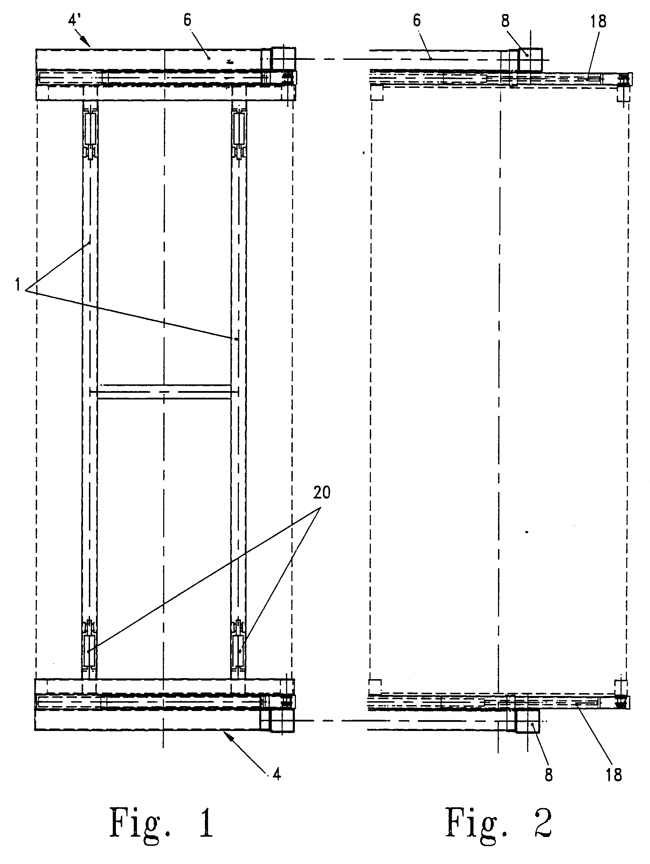

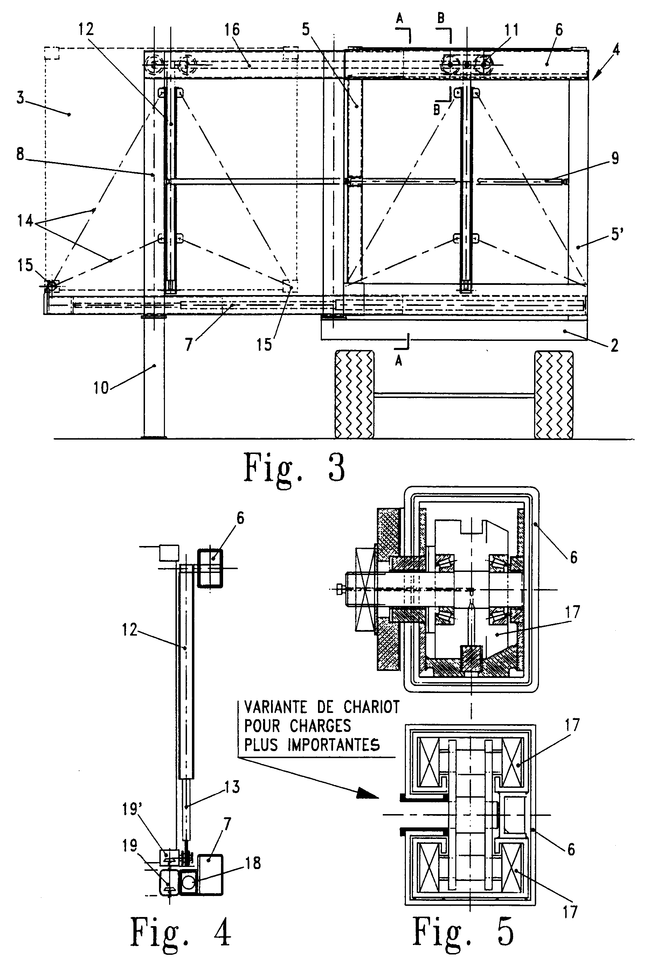

Sur les dessins annexés, donnés à titre d'exemple non limitatif d'une des formes de réalisation de l'objet de l'invention : la figure 1 représente le dispositif non déployé vu en plan, la figure 2 montre dans les mêmes conditions une vue partielle du dispositif déployé, la figure 3 est une vue de l'arrière en élévation de l'appareil déployé portant un conteneur, la figure 4 est une coupe verticale partielle, à une échelle différente, suivant les flèches A-A de la figure 3, et la figures 5 est une coupe agrandie, suivant les flèches B-B de la figure 3, montrant le chariot roulant sur la poutre télescopique haute.

Le dispositif, figures 1 à 5, est constitué d'un châssis ou plateforme mobile 1 pouvant être posés sur le plateau 2 d'un camion ou d'une remorque et porter un conteneur 3, ce châssis comportant deux portiques 4, 4' extensibles transversaux à l'axe du véhicule, situés à l'avant et à l'arrière du conterteur et constitués chacun de deux poutres verticales 5, 5' et de deux poutres télescopiques horizontales haute 6 et basse 7. Les portiques sont agencés pour ne pas dépasser le gabarit du conteneur en position rétractée. Deux colonnes mobiles 8, fixée sur les poutres télescopiques peuvent, en déployant ces dernières grâce à un verin d'extension 9, être écartées latéralement du véhicule. Les colonnes mobiles comportent un pied rétractable 10 apte à prendre appui sur le sol. Les poutres télescopiques hautes 6 portent un chariot mobile 11 supportant un ensemble de vérins 12 dont la tige 13 est pourvue de deux élingues 14 terminées par des crochets s'adaptant aux blocs d'accrochage 15 inférieurs équipant tous les conteneurs conformes aux normes internationales. Le chariot mobile 11 est actionné par un vérin de translation 16 et est équipé de galets 17 dont le profil est déterminé pour permettre le roulement à l'intérieur des éléments de la poutre télescopique haute 6 sans subir les effets de marche d'escalier en passant d'un élément à l'autre. Les vérins verticaux 12 peuvent avantageusement être du type à double enveloppe, les élingues 14 étant fixées sur l'enveloppe externe. Cette disposition permet de diminuer la hauteur des portiques 4, 4' et l'encombrement global de l'appareil. L'ensemble est complété, à partie inférieure des portiques côté conteneur, d'une règle de guidage 18 télescopique parallèle à la poutre télescopique basse 7, pourvue à son extrêmité d'un élément pouvant être fixé au bloc d'accrochage 15 externe de manière à translater le conteneur 3 lorsqu'il est soulevé par les vérins verticaux 12, la position de cette règle étant contrôlée par un vérin. Le châssis 1 est équipé de deux jeux de verrous à commande hydraulique, un jeu de verrous inférieurs 19 permettant de fixer le châssis sur le plateau du véhicule, et un jeu de verrous supérieurs 19' destinés à immobiliser le conteneur 3 sur ledit châssis.

Pour le chargement, le camion sur lequel est verrouillé le châssis 1 se range le long du grand côté du conteneur de manière à ce que les portiques 4, 4', dont l'écartement peut éventuellement être réglable au moyen de vérins longitudinaux 20, se situent à l'avant et à l'arrière dudit conteneur. Les deux portiques sont alors déployés grâce aux vérins d'extension 9 jusqu'à ce que les colonnes mobiles 8 se trouvent au-delà du centre de gravité de la charge. Les pieds rétractables 10 sont ensuite descendus jusqu'au sol, et les vérins de translation 16 sont actionnés pour amener les chariots mobiles 11 à l'applomb de l'axe du conteneur. Les crochets des élingues 14 sont fixées aux blocs d'accrochage 15 ainsi que l'extrêmité des règles de guidage 18. Le conteneur peut alors être soulevé au moyen des verins verticaux 12, être amené au-dessus du plateau 2 grâce au déplacement des chariots mobiles, et enfin être déposé sur le châssis 1 et bloqué en place au moyen des verrous supérieurs 19' à commande manuelle ou hydraulique. Les pieds rétractables (10) sont relevés, les portiques rétractés de la même manière, et le véhicule peut repartir. La manoeuvre n'aura duré que quelques minutes, toutes les opérations étant centralisées sur le camion, ce qui permet une importante économie de temps et des coûts d'exploitation à la tonne particulièrement compétitifs. Pour le déchargement, les mêmes opérations seront effectuées, mais dans l'ordre inverse.

Le transport de charges diverses telles qu'engins de travaux publics ou de dépannage, s'effectue au moyen d'u châssis secondaire muni de platelages mobiles ou fixes utilisant les fixations du système de levage.

L'ensemble des mouvements, ainsi que la manoeuvre des verrous 19, 19' étant assurés par vérins. Grâce à une centrale de pression hydraulique, indépendante ou non du camion, commandée par une boîte à boutons éventuellement mobile, ou une télécommande à transmission par câble ou sans fil. Les opérations peuvent être partiellement automatisés grâce à des circuits électroniques programmables de types connus et des microcontacts judicieusement disposés sur l'appareil.

L'ensemble des opérations de manipulation comprennent généralement :
1) élargissement
2) vérinage au sol
3) translation du chariot
4) mouvement de descente des vérins de prise en charge
5) verrouillage de la charge (manuel)
6) levage
7) télescopage de la règle 18 pour l'aide à la translation (verrouillage manuel)
8) repli en deux mouvements
9) pose pour verrouillage manuel ou hydraulique

Le positionnement des divers éléments constitutifs donne à l'objet de l'invention un maximum d'effets utiles qui n'avaient pas été, à ce jour, obtenus par des équipements similaires.

## Revendications

1. Châssis amovible pour chargement, déchargement et transbordement de conteneurs, destiné à la manutention des conteneurs (3) pour transport de marchandises, ou de charges diverses, sur des camions ou des wagons, sans intervention d'engins de levage tels que grue, pont roulant ou autres, et permettant le déchargement direct au sol,
caractérisé par la combinaison d'un châssis (1) indépendant ayant sensiblement la largeur du conteneur (3) et pouvant être installé et verrouillé sur le plateau (2) d'un camion ou d'une remorque, ledit châssis comportant deux portiques (4, 4') extensibles latéralement, transversaux à l'axe du véhicule, situés à l'avant et à l'arrière du conteneur et équipés chacun d'une colonne mobile (8) avec pied rétractable (10) pouvant prendre appui sur le sol, ladite colonne mobile étant montée sur deux poutres télescopiques haute (6) et basse (7) du portique pouvant se déployer latéralement, un chariot (11) roulant sur la poutre télescopique haute portant un ou deux vérins verticaux (12) pourvus d'élingues (4) terminées par des crochets s'adaptant aux blocs d'accrochage inférieurs (15) prévus sur les conteneurs normalisés, le châssis (1) étant équipé d'un jeu de verrous inférieurs (19) permettant de le fixer sur le plateau (2) du véhicule, et d'un jeu de verrous supérieurs (19') destinés à immobiliser le conteneur (3) sur ledit châssis.

2. Dispositif selon la revendication 1, se caractérisant par le fait que les portiques (4, 4') sont équipés, à leur partie inférieure côté conteneur, d'une règle de guidage (18) télescopique parallèle à la poutre télescopique basse (7), pourvue à son extrémité d'un élément pouvant être fixé au bloc d'accrochage inférieur (15) externe, et d'un vérin interne permettant de translater le conteneur (3) lorsqu'il est soulevé par les vérins verticaux (12) et solidarisé du châssis (1).

3. Dispositif selon l'une quelconque des revendications précédentes, se caractérisant par le fait que les portiques (4, 4') transversaux sont agencés pour ne pas dépasser le gabarit du conteneur en position rétractée.

4. Dispositif selon l'une quelconque des revendications précédentes, se caractérisant par le fait que l'écartement des deux portiques (4, 4') est réglable au moyen de vérins longitudinaux (20)

5. Dispositif selon l'une quelconque des revendications précédentes, se caractérisant par le fait que les vérins verticaux (12) sont du type à double effet, les élingues (14) étant fixées sur les oreilles de la double enveloppe externe

6. Dispositif selon l'une quelconque des revendications précédentes, se caractérisant par le fait que le chariot mobile (11) est actionné par un vérin de translation (16) et est équipé de galets (17) dont le profil est déterminé pour permettre le roulement à l'intérieur des éléments de la poutre télescopique haute (6)

7. Dispositif selon l'une quelconque des revendications précédentes, se caractérisant par le fait que l'ensemble des mouvements des portiques (4, 4'), des vérins verticaux (12) de levages, des règles de guidage (18) et des jeux de verrous supérieurs (19) et inférieurs (19') est assuré par des moyens hydrauliques grâce à une centrale de pression indépendante ou non du véhicule

8. Dispositif selon la revendication 7, se caractérisant par le fait que la centrale de pression hydraulique est commandée par une boîte à boutons éventuellement mobile

9. Dispositif selon la revendication 7, se caractérisant par le fait que la centrale de pression hydraulique est commandée par la télécommande à transmission par câble ou sans fil.

10. Dispositif selon la revendication 7, se caractérisant par le fait que les opérations sont partiellement automatisées grâce à des circuits électroniques programmables de types connus et des microcontacts judicieusement disposés sur l'appareil

## Claims

1. Removable frame from loading, unloading and moving container's manutention (3) to carry goods or various loads, on trucks or wagons without machinery for raising like cranes, gantry or others, and permit to unload directly on ground,
characterised by arrangement one frame
(1) Independent be have around the width of container
(3) And allowed to put and bolt on the platform
(2) Of truck and trailer, the said frame have two porticoes (4,4') with lateral spreading, transverse at the axle of vehicle, situated before and back of container and each equipped with a removable column (8) which is assembling on two height telescopic beams (6) and down (7) of portico can to lateral spreading a slide trolley (11) on the telescopic height beam support one or two vertical jacks (12) equipped with slings (4) ended by hook blocks to put down hook blocks (15) allowed on standards containers, the frame (1) equipped and adapted with down both bolt (19) permitting to fix it on the platform (2) of vehicle and height on both bolt (19') must immobilise the container (3) on this frame.

2. Arrangement following claim (1), well defined by the fact that porticoes (4,4') are equipping on down part container side by a telescopic guide rule (18) parallel at the down telescopic beam (7), provide at his end an element can be fixed on down hook blocks (15) outside , and inside jack permitting to transfer the container (3) when it's rising by vertical jacks (12) and jointly with frame (1).

3. Arrangement following one or other precedent claims well defined by the fact that porticoes (4,4') transversely are allowed to not outside of the standard container in unspread position.

4. Arrangement following one or other precedent claims to characterise by the fact that move from both porticoes (4,4') is adjustable by means of longitudinal jacks (20).

5. Arrangement following one or other precedent claims to characterise by the fact that vertical jacks (12) are both effect type, the slings (14) being fixed on the ears of outside both envelop.

6. Arrangement following one or other precedent claims to characterise by the fact this slide trolley (11) is moving by a translation jack (16) and equipped with roller (17) which has the shape to permit the inside roller of the height telescopic beam's elements (6).

7. Arrangement following one or other precedent claims to characterise by the fact this porticoes group movement (4,4') of vertical jacks 12 to raise, guide rules (18) and group height bolting (19) and down (19') makes by hydraulic means to order by the pressure from power station or not of the vehicle.

8. Arrangement following the claim 7 to characterise by the fact this hydraulic power station is ordering by eventually a moving case's buttons.

9. Arrangement following the claim 7 to characterise by the fact this hydraulic case's buttons is ordering with operate remote control by cable or without thread.

10. Arrangement following the claim 7 to characterise by the fact these operations are partially automatic by electronic programmable circuits of type knew and microchip, judiciously arranged on appliance.

## Patentansprüche

1. das abnehmbare Chassis für das laden, das entladen und das Ueberladen des Containers, ist zu der Verladung des Containers (3) um Güter oder diverse Ladungen zu transportieren, bestimmt. Der Transport auf Lastkraftwagen oder Waggons Geschiet ohne Einmischung des Kranes oder der Rollbrücke so dass das Entladen direkt auf dem Grund geschiet.
Das abnehmbare Chassis ist gekennzeichnet durch die Kombination eines Chassis:
(1) Autonom, das bemerklich dieselbe Breite als den Container hat.
(2) Von einem LKW oder von einem Aufleger ; das genannte Chassis hat zwei Portikus die seitlich ausziehen können, querüber die Achse des Transportmittels. Diese portikus befinden sich vorne und hinten des Containers und sind jeder vom einem beweglichen Pfeiler (8) augerüstet, mit ainziehbarem Fuss (10) , der auf Grund stützen kann. Der bewegliche Pfeiler ist auf zwei Teleskopischen Balken rollen : der hat eine oder zwei vertikale Wagenwinden die mit Tragbändern (4) und haken (am Ende der tragbänder) versehen sind. Diese Haken können an den niedrigen Ankoppel-Blöcke (15); normalerweise auf den Standartcontainer vorgesehen; befestigt werden. Bei diesem Standartcontainer ist der Chassis (1) ausgerüstet mit einer Serie von Riegeln untenan (19) dem Chassis um ihn auf dem plateau (2) des Transportmittels zu fixieren und mit einer Serie von Riegeln obenan (19') um den Container (3) auf dem Chassis zu blockieren.
(3) Das auf dem Plateau installiert und verriegelt werden kann.

2. Die entscheidung laut des Erfordnis Nummer 1 : die Portikus (4,4') sind vorgesehen an ihren Einzelteilen der Container seite von einem teleskopischen
Lenklineal (18) parallel zu den niedrigen teleskopischen balken (7), mit an dem äussersten Ende, einem Element das auf dem niedrigen und externen Ankoppelblock (15) fixiert werden kann ; und von einer internen Wagenwinde die das Container (3) übertragen kann wann das Container durch vertikalen Wagenwinden (12) aufgeheben ist und sich am Chassis (1) zusammenscheisst.

3. Die Entscheidung laut eines oder anderes voriger Erfordnis, charakteristisch für die querübere Portikus (4,4') die so geordnet sind, dass sie nicht höher oder länger als die Grösse des Containers, in zusammenziehender Position, sind.

4. Die Entscheidung laut eines oder anderes voriger Erfordernis, charakteristisch für die Verbreiterung des zwei Portikus (4,4') regulierbar durch längelange Wagenwinden (20).

5. Die Entscheidung laut eines oder anderes voriger Erfordnis, charakteristisch für die vertikale Wagenwinden (12) die ein Doppeleffekt haben die tragebänder (14) die an der äusserste Umhüllung fixiert sind.

6. Die Entscheidung laut eines oder anderes voriger Erfordnis, charakteristisch für den Kranwagen (11) der durch eine übertragende Wagenwinde (16) ausgerüstet ist mit Drehrädern (17) wovon das Profil determiniert ist um die Umdrehung an der Innenseite des Elements vom hohen teleskopiscen balken (6).

7. Die Entscheidung laut eines oder anderes voriger Erfordnis, charakteristisch für die gangzheit der Bewegungen des Portikus (4,4') lotrechte Wagenwinden (12), das lenklineal (18), der (19) hohere und niedrige (19') Wagenwindenspiel durch hydraulisches Mittel versichert, dank einer Drückzentrale unabhängig oder nicht vom Transportmittel.

8. Die Entscheidung laut eines oder anderes voriger Erfordnis, charakteristisch für die Drückzentrale die durch eventuell bewegliche Drückknöpfer gelenkt wird.

9. Die Entscheidung laut des Erfordernis Nummer 7, charakterisch für die hydraulische Drückzentrale durch eine drahtlose Fernbedienung oder eine Fernbedienung mit Uebertragung via Kabel.

10. Die Entscheidung laut des Erfordernis Nummer 7, charakteristisch für die behandlungen teilweise automatisiert dank dem elektronischen programmierten Stromkreis von gekannten Typen oder dank den Micro-Verbindungen, sehr vernünftig auf dem Apparat gestellt.
